# EUROPEAN PATENT APPLICATION

(11) **EP 4 838 080 A1**
(43) Date of publication of application: **11.11.2026**
(21) Application number: 26382630.7
(22) Date of filing: 30.04.2026
(51) Int. Cl.: F02M 35/024, F02M 35/08, F02M 35/10, F02M 35/16, F02M 35/02, B60F 3/00

(54) **AIR INTAKE SYSTEM FOR AMPHIBIOUS VEHICLES**

(30) Priority: 06.05.2025 ES 202530837 U
(71) Applicant: Structural Aerospace Systems S.L., 24010 León (ES)
(72) Inventor: De Juan Gutiérrez, Javier, León (ES); Freile Mansilla, Oscar, León (ES); Merino Flecha, Pedro Luis, León (ES)
(74) Representative: Pons IP

(57) **Abstract**

The present invention relates to an air intake system for systems to be fed of an amphibious vehicle, comprising: a chamber (1) containing the air for the system to be fed, with a casing separating an inside of the chamber from the outside, an outer vent (2) for communicating the outside and the inside of the chamber, comprising a first inlet for the air from the outside, and a first outlet for the exit of air, a filter box in the chamber communicating the chamber and the system to be fed, an access for communicating the chamber with the filter box (3), wherein the access also comprises a second inlet, misaligned with the first outlet, for the entry of air from the chamber, and a second outlet for the exit of air from the access to the filter box, where the second inlet is located.

## Description

### OBJECT OF THE INVENTION

The invention relates to an air intake system for amphibious vehicles. The intake system of the invention prevents water from entering the air intake of at least one system to be fed of the amphibious vehicle in adverse atmospheric and navigation conditions. Thus, this system provides the amphibious vehicle with a high degree of operational safety in adverse conditions, as well as protection against accidents.

### BACKGROUND OF THE INVENTION

Amphibious vehicles have the ability to travel on land and sail on water, so these vehicles comprise systems that allow travel or sailing in each situation. Said amphibious vehicles have systems to be fed with air, such as, for example, internal combustion engines, a ventilation system for the passenger cabin or a ventilation system for other types of circuits, which require an air inlet.

One of the most common problems with these vehicles is the entry of water or other elements along with the necessary air. In this case, amphibious vehicles exacerbate said problem during sailing, as the entry of water through the air intake vent of the system to be fed can render the system to be fed unusable or damage it. One way of solving the problem is through the use of chimneys or similar devices that keep the air intake vent away from the water during sailing, but this entails a higher cost and a more difficult construction with a larger volume of the amphibious vehicle.

Furthermore, when the amphibious vehicle is sailing, in bad weather conditions such as storms, the vehicle may encounter large waves or heavy rain that could cause water to enter through the air intake vent or even cause the amphibious vehicle to capsize. Thus, the chimneys or similar do not prevent water from entering the systems to be supplied in such adverse conditions.

Furthermore, if the amphibious vehicle capsizes during sailing, one of the biggest problems is that water enters through the air intake vent and floods the systems to be fed. The flooding of said systems to be fed may cause them to no longer reactivate once the amphibious vehicle returns to the operative position for sailing.

### DESCRIPTION OF THE INVENTION

The invention relates to an air intake system for systems to be fed in amphibious vehicles which protects the air intake to the system to be fed, especially during sailing, preventing water from entering into the system to be fed in adverse conditions.

Throughout the description, reference is made to elements located in upper and lower positions, which shall be considered with the air intake system mounted on an amphibious vehicle, with the amphibious vehicle located in a horizontal position.

The air intake system comprises a chamber intended to contain the air for the system to be fed. Said chamber comprises an outer casing that separates the inside of the chamber itself from the outside.

Furthermore, the intake system comprises an outer vent intended to communicate the outside with the inside of the chamber, for example, in the form of a snorkel. The outer vent therefore allows air to enter into the chamber through a first inlet which it has for this purpose, through which the air enters the outer vent itself, and a first air outlet through which the air passes from the outside to the inside of the chamber itself. Air, which is subsequently used by at least one system to be fed, which is preferably located outside the chamber itself. This outer vent prevents air from entering directly from the outside of the chamber, which reduces the risk of water entering the chamber itself.

Examples of systems to be fed would be one or more internal combustion engines and ventilation systems for both the cabin and heat adjustment systems.

The intake system has a filter box inside the chamber. Said filter box may comprise different air filters that protect the system to be fed. In this way, the air can be treated prior to the air entering the system to be fed. For example, by using particle-trapping filters or anti-moisture filters, the introduction of airborne particles can be prevented or the moisture in the outside air can be reduced.

The filter box is equipped with an access that communicates the inside of the chamber with the inside of the filter box, such that the air introduced through the outer vent and contained inside the chamber passes to the filter box. Said access, in turn, has a second inlet through which the air enters from the outside of the chamber, and a second outlet through which the air is introduced inside the filter box.

In addition, the first air outlet, from the outer vent to the inside of the box, is offset, misaligned with respect to the second air inlet, from the inside of the chamber to the access. This displacement serves to prevent the possible direct entry of water between said first outlet and second inlet. In this way, an indirect communication is established between the outer vent and the filter box, which allows the air from the outside to be conditioned before entering the filter box, thereby preventing the direct entry of water before the air enters the filter box.

Preferably, the intake system comprises a blocking system which at least partially prevents passage through the outer vent. More preferably, said blocking system prevents total passage through the outer vent. This total blockage can be useful in the event of capsizing or in adverse conditions, as the intake system is completely sealed, preventing passage to the inlet of the system to be fed, especially of water that could damage the systems to be fed.

Preferably, the blocking system may in turn comprise at least one shut-off valve. This shut-off valve allows the access to the inside of the chamber to be controlled, such that it can block or allow entry to the inside of the chamber through the outer vent continuously, being able to remain in a position that partially blocks access. This allows the shut-off valve to block the outer vent in the event of capsizing or very adverse weather conditions, preventing air or water from entering inside the chamber. This protects the systems to be fed. For example, if the system to be supplied is an internal combustion engine, by preventing water from entering inside the box, water is also prevented from entering the engine through the air intake of the engine itself.

Said shut-off valve may have a mechanism that allows tilting between a first position that allows passage therethrough and at least a second position that partially allows passage therethrough. More preferably, the mechanism may allow tilting to a third position that blocks the passage through the shut-off valve, such that the chamber is sealed shut. An example of a mechanism that allows tilting would be the tilting plate. By tilting the tilting plate, it moves from the first position to a third blocking position in which the plate occupies the entire cross section of the outer vent such that passage through the vent is blocked. This allows the sealed closure of the chamber and, therefore, prevents the entry of water inside the chamber for as long as necessary.

Preferably, said blocking system can be remotely controlled or automated to partially or completely prevent passage through the outer vent.

Additionally, the system could, preferably, activate the total closure of the blocking system in the event of receiving an alert of the amphibious vehicle capsizing or of bad weather conditions.

Preferably, and in addition to the blocking system, the outer vent has anti-splash slats that allow air to pass through and while preventing drops from entering inside the chamber. Said anti-splash slats can be a series of inclined slats positioned at the first inlet or substantially close to the same such that, in the event of rain or water striking the first inlet of the outer vent, the water, or at least part of it, is repelled or can be managed so that it does not reach the inside of the chamber.

Preferably, the intake system has a drainage system to be able to extract any water from inside the chamber.

The drainage system preferably comprises a bilge pump intended to force the removal of water from the inside of the chamber towards the outside of the same through the drainage tube. Said bilge pump can be either outside or inside the chamber. It is preferable to arrange it inside the chamber. Even if the conditions are not very adverse, while the amphibious vehicle is sailing, it is possible for small drops to enter inside the chamber through the outer vent, or even the condensation itself inside the chamber may cause the humidity of the air to turn into drops of water. In this way, the drops accumulate inside the chamber. In this way, the bilge pump can be activated at any time to remove the water that may have entered the chamber.

Optionally, once installed in the vehicle, the inside of the chamber has a recess at the bottom thereof, such that the water that enters or appears inside the chamber begins to occupy the recess by gravity. Preferably, to save space, the bilge pump is arranged in the recess or draws water from the recess itself. In this way, the bilge pump can be activated with a lower amount of water, so it is not necessary to wait for the chamber to reach a certain water level.

Since the second inlet is offset with respect to the first outlet, the water that could enter directly from the outer vent would accumulate on the lower surface of the inside of the chamber, such that the access only allows the access of air, and not of water, accumulated inside the chamber. Preferably, the second inlet of the access is located in an upper area of the inside of the chamber, thereby improving the fact that the air introduced through said second inlet contains a much smaller amount of water. Due to this upper position of the second inlet and the management of the bilge pump to remove water from inside the chamber, it is still much more difficult for the water level to reach the second inlet and, consequently, for water to enter the filter box. Optimally, the second inlet is arranged oriented, once the intake system is mounted on the vehicle, towards an upper surface of the inside of the chamber, such that the water that may enter the chamber through the outer vent flows to the lower surface of the chamber itself and is removed via the bilge pump before the water reaches a level at which the water could enter the second inlet. In this way, the second inlet allows air to pass under the upper surface of the chamber towards the filter box.

The filter box also comprises a third outlet, preferably in the lower area thereof once it is mounted on the amphibious vehicle. Said third outlet communicates the filter box with the inlet to the system to be fed. Given that the air circulating through the third outlet has been separated from the water in the chamber and has been filtered in the filter box, the air entering the system to be fed has the optimal conditions for said system to be fed.

Preferably, since both the third outlet and the drainage tube pass through the outer casing of the chamber to communicate with different elements outside the chamber, the system to be fed in the case of the third outlet and the outside of the chamber itself in the case of the drainage tube inside the chamber, at least one of the two, the third outlet and the drainage tube, pass through the outer casing in a sealed manner to prevent the entry of water through said passages. Optimally, both passages, the third outlet and the drainage pipe, pass through the outer casing in a sealed manner, preventing the passage of water from the outside to the inside of the chamber through said passages.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a perspective view of the intake system.
Figure 2 shows a cross-sectional view of the inside of the intake system.

### PREFERRED EMBODIMENT OF THE INVENTION

A preferred embodiment of an intake system for systems to be fed of an amphibious vehicle, such as, for example, for internal combustion engines, batteries and other systems, which is the subject matter of this invention, is described below.

The intake system of the preferred embodiment comprises a chamber (1), intended to contain the air for the system to be fed. Said chamber (1) in turn comprises an outer casing that separates the outside from an inside of the chamber (1) itself. Furthermore, the chamber (1), once mounted on the amphibious vehicle, also comprises an upper surface (12) and a lower surface (11).

In addition, the intake system comprises an outer vent (2) arranged on the upper surface (12) intended to communicate the outside and the inside of the chamber (1).

In turn, said outer vent (2) comprises a first inlet (13) through which the air enters the outer vent (2) itself and a first outlet that communicates the outer vent (2) with the inside of the chamber (1).

In the embodiment shown, the outer vent (2) is L-shaped, having a right angle and, therefore, a vertical section and a horizontal section. In this way, the outer vent (2) prevents water striking from the outside, perpendicular to the upper surface (12), from directly accessing the chamber (1). Moreover, since the outer vent (2) has the horizontal section, air and water can only enter the outer vent (2) in a horizontal direction, making it more difficult for water to enter the chamber (1).

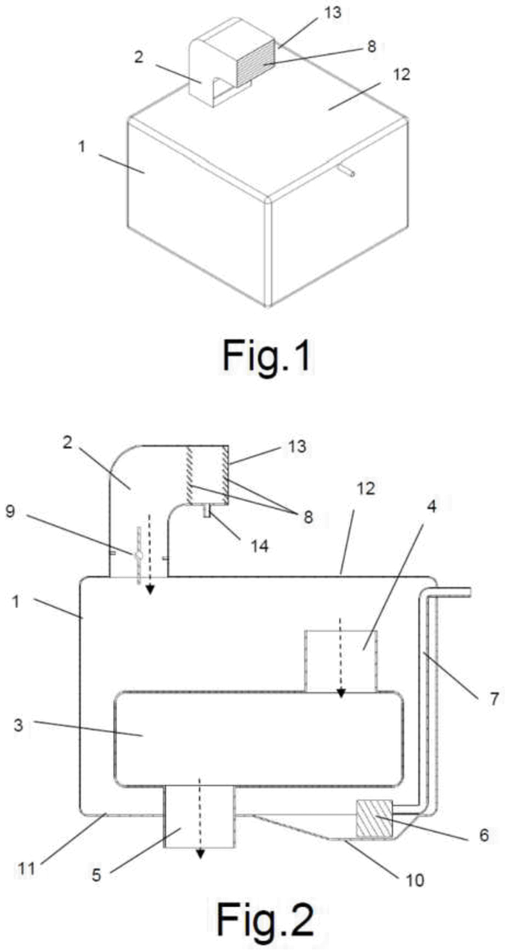

Figure 1 shows a perspective view of the intake system, which comprises the chamber (1) and the outer vent (2) arranged on the upper surface (12) of the chamber (1). In this way, the air from outside only enters through the outer vent (2) to the inside of the chamber (1).

In addition, ant-splash slats (8) are arranged at the first inlet (13) of the outer vent (2). Said slats (8) are in the form of inclined panels that prevent water that strikes obliquely on the first inlet (13) from entering the inside of the outer vent (2) and therefore the inside of the chamber (1).

Additionally, inside the outer vent (2) there are at least two groups of anti-splash slats (8) in parallel, a first group of slats (8) located at the first inlet (13), and another group inside the outer vent (2) intended to prevent drops that may pass through the first group of slats (8) from penetrating inside the chamber (1).

The system, additionally inside the outer vent (2), comprises a blocking system to block access through the outer vent (2) itself. Said blocking system in turn comprises a shut-off valve (9) intended to block or allow communication between the chamber (1) and the outside through the outer vent (2).

In this way, firstly, the air from outside enters the inside of the chamber (1) through the outer vent (2). The passage of air from the outside to the inside of the chamber (1) is regulated by the shut-off valve (9), which allows or blocks the communication between the inside of the chamber (1) and the outside. Said shut-off valve (9) comprises a tilting plate that is controlled by a remotely controlled mechanism (not shown), establishing a tilting between the blocking position and the air communication or passage position through the shut-off valve (9) itself. Said blocking position allows the inside of the chamber (1) to be sealed with respect to the outside, preventing the entry of air and, to a greater extent, the entry of water inside the chamber (1) itself.

By way of example of a type of shut-off valve (9), it is of the type with a tilting plate shape, so that when it pivots by means of the mechanism it occupies the entire cross section of the outer vent (2). Thus, the air and/or water are retained inside the outer vent (2) and communication with the inside of the chamber (1) is prevented.

In addition, in order to be able to remove the water retained inside the outer vent (2), the intake system, between the first inlet and the first outlet, has at least one one-way conduit (14) that allows water to exit the outer vent (2), but, in turn, prevents air or water from entering through said one-way conduit (14).

For example, when the amphibious vehicle is sailing normally, the shut-off valve (9) is arranged as in Figure 2, allowing air to pass into the chamber (1). However, if the amphibious vehicle capsizes during navigation or the conditions are very adverse with large waves, the shut-off valve (9) could be moved by the mechanism (not shown) and would block the communication in the outer vent (2), preventing the entry of both air and water into the chamber (1).

Additionally, the intake system also has a filter box (3) inside the chamber (1) intended to condition the air that passes through the filter box (3) itself from inside the chamber (1) to the system to be fed.

The filter box (3) for conditioning the air circulating therethrough may house one or more filters (not shown) of the same type or with different functionality in order to improve the type of conditioning to be performed.

Said filter box (3) also comprises an inside and is equipped with an access (4). Figure 2 shows how said access (4) is in the upper part of the filter box (3) itself.

The access (4) is intended to communicate the inside of the chamber (1) with the inside of the filter box (3). In turn, the access (4) comprises a second inlet and a second outlet. The second inlet is the area of the access that communicates the inside of the chamber (1) with the access (4), and the second outlet is the part of the access (4) that communicates said access with the inside of the filter box (3).

The second inlet of the access (4) is offset and misaligned with respect to the first outlet of the outer vent (2) to prevent the possible direct entry from the outer vent (2) to the filter box (3).

Having the first outlet and the second inlet misaligned means that the water that enters inside the chamber (1) through the outer vent (2) is precipitated by gravity to a lower area inside the chamber (1), such that the air contained inside the chamber (1) is separated from the water by gravity, thereby ensuring any water inside the chamber (1) is prevented from entering the filter box (3) through its access (4), and to a greater extent, preventing said water from reaching the system to be fed.

To improve the passage of only air and not water through the access (4), said access (4) is oriented towards the upper surface (12) of the chamber (1), such that the air introduced into the filter box (3), as it is from the upper part of the inside of the chamber (1), improves the reduction of water that could be introduced into the filter box (3) itself.

The filter box (3) also has a third outlet (5) intended to communicate the inside of the filter box (3) itself with the system to be fed, such as, for example, with an air intake of an internal combustion engine.

Through said third outlet (5), the air obtained, after all the means provided for conditioning the outside air, slats (8), blocking system, misalignment between first outlet and second inlet, access (4) orientation and filters inside the filter box (3), is suitable for feeding the system to be fed, such as, for example, the intake of an internal combustion engine. Figure 2 shows that said third outlet (5) is located in the lower part of the filter box (3) and passes through the lower surface (11) of the outer casing of the chamber (1), such that the system to be fed could be located just below the chamber (1) itself.

Lastly, said air intake system has a drainage system to drain the water that may have accumulated inside the chamber (1).

Said drainage system in turn comprises a bilge pump (6) intended to force the water to move from the inside of the chamber (1) to the outside of the chamber itself.

Figure 2 shows that the bilge pump is located inside the chamber (1) and that the water exiting from the inside is captured by the bilge pump (6) itself and is guided to the outside through a drainage pipe (7) that communicates the bilge pump (6) itself with the outside.

Said bilge pump (6) prevents or delays the water level inside the chamber (1) from reaching the second inlet of the access (4).

Furthermore, the lower surface of the inside of the chamber (1) comprises a recess (10). The function of said recess (10) is that, in the event that water enters through the outer vent (9) into the chamber (1), said water accumulates in said recess (10) by gravity. Additionally, the bilge pump is located in said recess (10) to improve the collection of water inside the chamber (1) by the bilge pump (6). An example of use would be for the bilge pump (6) to start operating when the water accumulated in said recess (10) reaches a certain height.

## Claims

1. - An air intake system for at least one system to be fed of an amphibious vehicle, **characterised in that** it comprises:
a chamber (1) intended to contain the air for the system to be fed, wherein the chamber (1) comprises an outer casing that separates an inside of the chamber (1) from the outside,
an outer vent (2) intended to communicate the outside and the inside of the chamber (1), wherein the outer vent (2) in turn comprises a first inlet configured for the entry of air from the outside of the intake system, and a first outlet configured for the exit of air from the inside of the outer vent (2) towards the inside of the chamber (1),
a filter box (3) located inside the chamber (1) intended to communicate the inside of the chamber (1) and the system to be fed, wherein the filter box (3) comprises an inside,
an access (4) intended to communicate the inside of the chamber (1) with the inside of the filter box (3), wherein the access (4) in turn comprises a second inlet configured for the entry of air from the inside of the chamber (1), and a second outlet configured for the exit of air from the inside of the access (4) to the inside of the filter box (3),
wherein the second inlet is misaligned with respect to the first outlet.

2. The system according to claim 1, comprising a blocking system for blocking access through the outer vent (2).

3. The system according to claim 2, wherein the blocking system comprises at least one shut-off valve (9) located in the outer vent (2).

4. The system according to claim 3, wherein the shut-off valve (9) is configured to move at least from a position where the outer vent (2) is sealed shut to a position that allows air to circulate.

5. The system according to any of claims 2 to 4, wherein the control of the blocking system is carried out remotely or automatically.

6. The system according to any of the preceding claims, wherein the outer vent (2) comprises anti-splash slats (8) that allow the passage of air while preventing the entry of drops inside the chamber.

7. The system according to claim 6, wherein the anti-splash slats (8) are inclined with respect to the inlet of the outer vent (2) and located at the first inlet of the outer vent (2).

8. The system according to any of the preceding claims, comprising a drainage system.

9. The system according to claim 8, wherein the drainage system comprises a bilge pump (6) which is preferably located inside the chamber (1).

10. The system according to any of the preceding claims, wherein the chamber (1) comprises a recess (10) in the lower surface (11).

11. The system according to any of the preceding claims, wherein the second inlet is oriented towards an upper surface of the inside of the chamber (1).

12. The system according to any of the preceding claims, wherein the filter box (3) comprises a third outlet which communicates the filter box (3) with the system to be fed and which is preferably located on a lower surface of the filter box (3).

13. The system according to any of the preceding claims, wherein the system to be fed is an internal combustion engine.

14. The system according to claims 12 and 13, wherein the drainage system comprises a drainage tube (7), and both the third outlet (5) and the drainage tube (7) pass through the outer casing of the chamber (1) such that at least one of them has a sealed connection to the outer casing.

15. The system according to any of the preceding claims, wherein the outer vent (2) comprises a one-way conduit (14) that allows water to exit, but prevents air or water from entering through said one-way conduit (14).
